# EUROPEAN PATENT SPECIFICATION

(11) **EP 3 120 706 B1**
(45) Date of publication and mention of the grant of the patent: **23.05.2018**
(21) Application number: 15782746.0
(22) Date of filing: 08.04.2015
(51) Int. Cl.: A22C 21/00, A22C 17/00

(54) **DEVICE AND METHOD FOR DEBONING MEAT WITH BONE**
VORRICHTUNG UND VERFAHREN ZUM ENTBEINEN VON FLEISCH MIT KNOCHEN
DISPOSITIF ET PROCÉDÉ DE DÉSOSSAGE DE VIANDE À OS

(30) Priority: 23.04.2014 JP 2014089641
(43) Date of publication of application: 25.01.2017
(73) Proprietor: Mayekawa Mfg. Co., Ltd., Koto-ku Tokyo 135-8482 (JP)
(72) Inventor: KIDO, Koji, Tokyo 135-8482 (JP)
(74) Representative: Regimbeau
(86) International application number: PCT/JP2015/060971
(87) International publication number: WO 2015/163148

(56) References cited:
- EP-A1- 0 366 855
- JP-A- H05 199 832
- JP-A- H07 313 049
- JP-A- 2002 010 732
- JP-A- 2013 507 101
- US-A- 5 401 210

## Description

### TECHNICAL FIELD

The present disclosure relates to a deboning apparatus and a deboning method whereby it is possible to separate a meat portion from a bone portion of a piece of bone-in meat with a high yield.

### BACKGROUND

A chicken drumette, or an upper segment of a chicken wing of a chicken carcass separated from a breast at a shoulder and from which a tip segment of the chicken wing is separated when poultry such as chicken is to be slaughtered, is separated from bones and widely eaten as boneless fried chicken. Furthermore, a chicken drumette with a meat portion turned over and bones not removed formed into a tulip shape is called "tulip" and often used for fried chicken. Tulips are popular for the favorable appearance and the easiness to eat by holding the bone portion by a hand, when served as fried chicken.

Conventionally, a meat portion and a bone portion of a chicken drumette are separated manually, including production of tulips. For instance, a worker makes a cut with a knife on a meat portion at an end of a chicken drumette that is adjacent to a wing tip, turns the meat portion over from the cut as if to flip it over toward an end adjacent to a breast and to peel the meat portion from the bone portion, thereby separating the meat portion from the bone portion.

However, the manual deboning work requires much effort and a large number of man hours. Thus, it is desirable to automate the deboning work to reduce the burden of workers and to reduce the time required.

Patent Document 1 discloses an apparatus for automating production of tulips. This automation apparatus includes a chicken-drumette fixing mechanism for nipping an end of a chicken drumette adjacent to a breast, a cut-forming mechanism for making a cut in a circumferential direction on a meat portion in the vicinity of a nipped section of the chicken drumette, and a meat tearing-and-turning mechanism for turning the meat portion over from a bone portion so as to flip it to form the chicken drumette into a tulip shape by inserting a pair of meat-tearing pieces into the cut and moving the meat-tearing pieces toward the other end. US 5401210 and EP 0366855 also disclose a method and apparatus for deboning meat.

### Citation List

### Patent Literature

Patent Document 1: JPH07-313049A

### SUMMARY

### Problems to be Solved

In the deboning work for completely separating a meat portion and a bone portion of a piece of bone-in meat such as a leg of a poultry carcass or a livestock carcass, it is necessary to perform a peeling step of peeling the meat portion from the bone portion by moving a meat separator corresponding to the meat-tearing pieces disclosed in Patent Document 1 along the entire length from one end to the other end, and a cutting step of cutting the meat portion adhering to the end from the bone portion.

To improve the yield from the meat portion, it is necessary to cut the meat portion at a position as close as possible to the bone portion at the end adjacent to the breast in the cutting step to reduce the meat portion that remains on the bone portion.

Further, in the separating step, it is necessary to move the meat separator flexibly along the curved surface of the meat portion having a thickness that is not constant in the longitudinal direction to prevent a bone head having a large diameter from getting damaged and mixed into the meat portion to deteriorate the product value of boneless meat.

The apparatus disclosed in Patent Document 1 is an apparatus for forming a tulip using a chicken drumette, and does not disclose a deboning process for separating a meat portion from a bone portion completely, or improving the yield of a meat portion.

Further, while pieces of bone-in meat such as legs vary in length, Patent Document 1 does not disclose any technical idea of changing the amount of movement of the pair of meat-tearing pieces in the longitudinal direction taking account of the individual difference in length.

At least one aspect of the present disclosure was made in view of the above issues of the conventional technique, and an object is to propose deboning a meat portion from a bone portion of a piece of bone-in meat having a bone head at least in one end such as a chicken drumette with a high yield taking account of the individual difference in length.

### Solution to the Problems

According to the present invention, a deboning apparatus and a deboning method as defined in the accompanying claims are provided.
(1) A bone-in meat deboning apparatus according to at least one aspect of the present disclosure comprises: a clamper for holding a piece of bone-in meat having a first end and a second end and including a bone head at least in the second end; a first cutter capable of moving toward and away with respect to the piece of bone-in meat being held by the clamper at the first end, for making a cut in a circumferential direction on a meat portion of the piece of bone-in meat in a vicinity of a held section of the piece of bone-in meat; at least one meat-portion peeling member which is insertable into the cut on the piece of bone-in meat being held by the clamper; an elastic support part for elastically supporting the at least one meat-portion peeling member so that the at least one meat-portion peeling member applies an elastic force to the piece of bone-in meat; a meat-portion-peeling driving part capable of changing a distance between the clamper and the at least one meat-portion peeling member; and a second cutter capable of moving toward and away with respect to the piece of bone-in meat being held by the clamper, for cutting the meat portion adhering to the second end including the bone head of the piece of bone-in meat.
   In the above configuration (1), the piece of bone-in meat having a bone head at least in one end (hereinafter, referred to as "piece of bone-in meat") is deboned while being suspended from the clamper.
   Specifically, a cut is formed on the piece of bone-in meat by the first cutter, and then the meat portion is peeled from the meat portion by the meat-portion peeling member. Since the meat-portion peeling member is in contact with the piece of bone-in meat while applying an elastic force to the piece of bone-in meat, when the piece of bone-in meat is lifted by the meat-portion peeling driving unit, it is possible to eliminate the risk that the meat-portion peeling member damages periostea and gristle adhering to the bone portion, and also to separate the meat portion with a high yield.
   Further, since the meat-portion peeling member is supported elastically, an end of the piece of bone-in meat that includes a bone head (hereinafter, also referred to as "second end") does not receive an excessive force when passing between the meat-portion peeling members even if the second end has a large diameter. Thus, there is no risk of damaging the bone head or the like, which eliminates the risk that bone fragments get mixed into the meat portion and damage the product value of boneless meat.
   Further, the meat portion adhering to the second end is cut off from the second end by the second cutter at the timing when the second end passes by the meat-portion peeling member. Thus, it is possible to improve the yield obtained from the meat portion even for pieces of bone-in meat having different lengths.
   To detect the above timing, the meat-portion peeling member is operated in conjunction with the second cutter by a link mechanism or the like, for instance, so that the meat-portion peeling member is operated in accordance with the motion of the meat-portion peeling member when the meat-portion peeling member passes by the second end.
(2) According to the invention, the at least one meat-portion peeling member includes a pair of meat-portion peeling members which are movable toward and away relative to each other. The bone-in meat deboning apparatus further comprises: a detection part for detecting a gap between the pair of meat-portion peeling members; and a control device for cutting off the meat portion adhering to the second end by moving the second cutter toward the piece of bone-in meat when the gap between the pair of meat-portion peeling members is at a threshold value or less.
   When the second end of the piece of bone-in meat including a bone head passes through the pair of meat-portion peeling members, the gap between the meat-portion peeling members is the largest. After the second end passes through the pair of meat-portion peeling members, the distance decreases.
   With the above configuration (2), it is possible to detect the timing when the second end of the bone portion passes through the pair of meat-portion peeling members, by detecting a change in the gap between the pair of meat-portion peeling members by the detection part. Specifically, the controller determines that the time when the gap between the meat-portion peeling members shifts to being not more than the threshold value from being more than the threshold value as the time when the second end of the bone portion has passed between the pair of meat-portion peeling members, and moves the second cutter toward the piece of bone-in meat to cut off the meat portion from the bone portion.
   In this way, it is possible to automate deboning and adjust the timing to cut each piece of bone-in meat even if pieces of bone-in meat have different lengths, which makes it possible to improve the yield obtained from the meat portion of each piece of bone-in meat.
(3) In some aspects, in the above configuration (2), the detection part includes a proximity sensor and a detection object, one of the proximity sensor or the detection object being disposed on a fixed section of the bone-in meat deboning apparatus and other one of the proximity sensor or the detection object being attached to movable one of the pair of meat-portion peeling members, and the control device is configured to determine that the gap between the pair of meat-portion peeling members is at the threshold value or less when the proximity sensor detects the detection object or when the proximity sensor does not detect the detection object.
   With the above configuration (3), since the detection part includes the proximity sensor and the detection object, it is possible to simplify the detection part and reduce the cost of the same.
(4) In some aspects, in the above configuration (2) or (3), the elastic support part is configured to change the elastic force applied to the piece of bone-in meat by the pair of meat-portion peeling members. The control device is configured to control the elastic support part so that the elastic force is a first elastic force when the gap between the pair of meat-portion peeling members is at the threshold value or less, and so that the elastic force is a second elastic force which is smaller than the first elastic force when the gap between the pair of meat-portion peeling members is greater than the threshold value.
   With the above configuration (4), it is possible to alter the elastic force applied to the piece of bone-in meat between at least two stages during operation of the deboning apparatus by the pair of meat-portion peeling members.
   Specifically, the piece of bone-in meat is supported stably by applying the first elastic force, which is relatively large, to the piece of bone-in meat, during peeling and cutting of the meat portion when the gap between the pair of meat-portion peeling members is not more than the threshold value. In this way, it is possible to peel and cut the meat portion securely. Furthermore, when the gap between the pair of meat-portion peeling members exceeds the threshold value due to the bone head passing between the pair of meat-portion peeling members, the second elastic force, which is smaller than the first elastic force, is applied to the piece of bone-in meat, which makes it possible to eliminate the risk that the meat-portion peeling members damage the periostea and gristle adhering to the bone portion. In this way, bone fragments would not get mixed into the meat portion to deteriorate the product value of boneless meat.
(5) In some aspects, in the above configuration (4), the elastic support part includes an air cylinder for supporting at least one of the pair of meat-portion peeling members elastically, a main pressurized air supply channel connected to the air cylinder, a three-way valve disposed in the main pressurized air supply channel, two pressurized air supply channels connected to the main pressurized air supply channel via the three-way valve so as to be switchable, and two pressure adjustment valves disposed on the two respective pressurized air supply channels. The control device is configured to control the three-way valve so that the elastic force is the first elastic force when the gap between the pair of meat-portion peeling members is at the threshold value or less, and the elastic force is the second elastic force when the gap between the pair of meat-portion peeling members is greater than the threshold value.
   With the above configuration (5), which is simplified and cost cutting since the elastic support part has the air cylinder, it is possible to alter the elastic force applied to the piece of bone-in meat by the pair of meat-portion peeling members between two stages during operation of the deboning apparatus.
(6) In some aspects, in any one of the above configurations (1) to (5), the bone-in meat deboning apparatus further comprises a rotary driving part for rotating the clamper about a rotational axis. A cut-making part including the first cutter, a meat-portion peeling part including the at least one meat-portion peeling member, and a bone-meat separating part including the second cutter are arranged along a circular track of the clamper.
   With the above configuration (6), with the piece of bone-in meat suspended from the clamper being moved through the processing parts in sequence, it is possible to provide the processing parts in a fixed state, which makes it possible to simplify the configuration of each processing part and reduce the cost of the same, as well as improving the processing efficiency.
(7) In some aspects, in any one of the above configurations (1) to (6), the meat-portion peeling part includes a first meat-portion peeling part which peels the meat portion to an intermediate position in an axial direction of a bone portion of the piece of bone-in meat, and a second meat-portion peeling part which peels the meat portion from the intermediate position in the axial direction of the bone portion of the piece of bone-in meat to the second end.
   With the above configuration (7), if the piece of bone-in meat is a chicken drumette or the like, it is possible to produce a tulip at the point of time when the meat portion of the piece of bone-in meat is peeled to the intermediate position in the axial direction of the bone portion at the first meat-portion peeling part. Further, it is possible to separate the meat portion entirely by continuing the process at the second meat-portion peeling part. In other words, it is possible to choose between production of tulip-shaped chicken sticks and complete separation of the meat portion.
(8) In some aspects, in the above configuration (7), in the first meat-portion peeling part, detection of the gap is not performed and a fixed value is used, and the second meat-portion peeling part is disposed in the bone-meat separating part.
   With the above configuration (8), it is possible to dispense with the detection part at the first meat-portion peeling part. Further, even if the bone-meat separating part is also functioning as the second meat-portion peeling part, it is unnecessary to provide an additional component. Thus, it is possible to reduce the installation cost of the deboning apparatus.
   It is possible to restrict damage to the bone portion and reduction of the yield from the meat portion within an allowable range even with the threshold value being a fixed value at the first meat-portion peeling part, because the thickness of the bone between the first end and the intermediate portion of the piece of bone-in meat is not substantially varied among different pieces of bone-in meat.
(9) A method of deboning bone-in meat according to the invention comprises: a clamping step of holding a piece of bone-in meat with a clamper, the piece of bone-in meat having a first end and a second end and including a bone head at least in the second end; a cut-making step of making a cut in a circumferential direction on a meat portion of the piece of bone-in meat in a vicinity of a held section of the piece of bone-in meat held by the clamper at the first end; a meat-portion peeling step of peeling the meat portion of the piece of bone-in meat by increasing a distance between the clamper and at least one meat-portion peeling member using the meat-portion peeling member inserted into the cut; a bone-meat separating step of cutting off the meat portion adhering to the second end from the second end when the second end including the bone head of the piece of bone-in meat reaches the at least one meat-portion peeling member in the meat-portion peeling step. In the meat-portion peeling step, the at least one meat-portion peeling member is supported elastically so that the at least one meat-portion peeling member contacts the piece of bone-in meat while applying an elastic force to the piece of bone-in meat.
   In the above method (9), the piece of bone-in meat is deboned while being suspended from the clamper.
   In the above meat-portion peeling step, since the meat-portion peeling member is in contact with the piece of bone-in meat while applying an elastic force to the piece of bone-in meat, when the piece of bone-in meat suspended on the clamper moves upward, it is possible to eliminate the risk that the meat-portion peeling member damages periostea and gristle adhering to the bone portion, and also to separate the meat portion with a high yield.
   Further, since the meat-portion peeling member is supported elastically, the second end including a bone head of the piece of bone-in meat does not receive an excessive force when passing between the meat-portion peeling members even if the second end is thick. Thus, there is no risk of damaging the bone head or the like, which makes it possible to improve the yield of the meat portion and eliminates the risk that bone fragments get mixed into the meat portion to deteriorate the product value of boneless meat.
   Further, in the meat-portion peeling step, the meat portion adhering to the second end is cut off from the second end by the second cutter at the timing when the second end passes between the meat-portion peeling members. Thus, even if pieces of bone-in meat have different lengths, it is possible to improve the yield obtained from the meat portion of each piece of bone-in meat.
(10) According to the invention, in the above method (9), the at least one meat-portion peeling member includes a pair of meat-portion peeling members which are movable toward and away relative to each other. The bone-meat separating step includes: a detecting step for detecting a gap between the pair of meat-portion peeling members; and a bone-meat separating step of cutting off the meat portion adhering to the second end when the gap between the pair of meat-portion peeling members is at a threshold value or less.
   In the above method (10), it is determined that the time when the gap between the pair of meat-portion peeling members shifts to being not more than the threshold value from being more than the threshold value as the time when the second end of the piece of bone-in meat has passed between the pair of meat-portion peeling members, and the second cutter is moved toward the piece of bone-in meat to cut off the meat portion from the bone portion.
   In this way, it is possible to adjust the timing to cut each piece of bone-in meat even if pieces of bone-in meat have different lengths, which makes it possible to improve the yield obtained from the meat portion of each piece of bone-in meat.
(11) In some aspects, in the above method (10), in the meat-portion peeling step, the elastic force is set to a first elastic force when the gap between the pair of meat-portion peeling members is at the threshold value or less, and the elastic force is set to a second elastic force which is smaller than the first elastic force when the gap between the pair of meat-portion peeling members is greater than the threshold value.
   With the above method (11), it is possible to alter the elastic force applied to the piece of bone-in meat by the pair of meat-portion peeling members between at least two stages during operation of the deboning apparatus.
   Specifically, the piece of bone-in meat is supported stably by applying the first elastic force, which is relatively large, to the piece of bone-in meat, during peeling and cutting of the meat portion when the gap between the pair of meat-portion peeling members becomes not more than the threshold value. In this way, it is possible to peel and cut the meat portion securely. Furthermore, when the gap between the pair of meat-portion peeling members exceeds the threshold value due to the bone head passing between the pair of meat-portion peeling members, the second elastic force, which is smaller than the first elastic force, is applied to the piece of bone-in meat, which makes it possible to eliminate the risk that the meat-portion peeling members damage the periostea and gristle adhering to the bone portion. In this way, bone fragments would not get mixed into the meat portion to deteriorate the product value of boneless meat.
(12) In some aspects, in any one of the above methods (9) to (11), the piece of bone-in meat includes an upper segment of a chicken wing of a chicken carcass which is closer to a body and from which a tip segment of the chicken wing is separated, the segment being separated from a breast at a shoulder of the chicken carcass (hereinafter, also referred to as "chicken drumette").
   With the above method (12), it is possible to separate the meat portion with a high yield without damaging the the bone portion of a chicken drumette, and there is no risk of breakage of bone heads or the like of the second end, which prevents bone fragments from being mixed into a meat portion to deteriorate the product value of boneless meat. Further, it is possible to improve the yield from the meat portion of each chicken drumette even if the chicken drumettes vary in length.

### Advantageous Effects

According to at least one embodiment of the present invention, it is possible to peel a meat portion without damaging a bone portion but with a high yield. Further, it is possible to peel a meat portion from a bone portion even if pieces of bone-in meat have different lengths, and there is no risk of breakage of a thick section of a bone head or the like, which prevents bone fragments from being mixed into a meat portion to deteriorate the product value of boneless meat.

### BRIEF DESCRIPTION OF DRAWINGS

FIG. 1 is a side view of a deboning apparatus according to some embodiments of the present invention.
FIG. 2 is a view on arrow A-A in FIG. 1.
FIG. 3 is a diagram for explaining the motion of a cut-making part of the deboning apparatus.
FIG. 4 is a perspective view of the first meat-portion peeling part of the deboning apparatus.
FIG. 5 is a diagram for explaining the motion of the first meat-portion peeling part of the deboning apparatus.
FIG. 6 is a perspective view of the second meat-portion peeling part of the deboning apparatus.
FIG. 7 is a diagram for explaining the motion of the second meat-portion peeling part.
FIG. 8 is a perspective view of a bone-meat separating part of the deboning apparatus.
FIGs. 9A and 9B are diagrams illustrating the motion of the bone-meat separating part. FIG. 9A illustrates a step of lifting a clamper and FIG. 9B illustrates a step of cutting off a meat portion.
FIG. 10 is a perspective view of the first meat-portion peeling part according to one embodiment.
FIG. 11 is a flowchart of a deboning step according to one embodiment.
FIG. 12 is a flowchart of a bone-meat separating step according to one embodiment.
FIG. 13 is a flowchart of a meat-portion peeling step according to one embodiment.
FIG. 14 is a system diagram of an elastic support part according to one embodiment.
FIGs. 15A to 15F are diagrams for explaining the motion in a deboning step according to one embodiment.
FIG. 16 is a planar view of a deboning apparatus according to one embodiment.

### DETAILED DESCRIPTION

With reference the accompanied drawings, some embodiments of the present embodiments will be described. It is intended, however, that unless particularly specified, dimensions, materials, shapes, relative positions and the like of components described in the embodiments or illustrated in the drawings shall be interpreted as illustrative only and not limitative of the scope of the present invention.

For instance, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For instance, an expression of an equal state such as "same" "equal" and "uniform" shall not be construed as indicating only the state in which the feature is strictly equal, but also includes a state in which there is a tolerance or a difference that can still achieve the same function.

Further, for instance, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

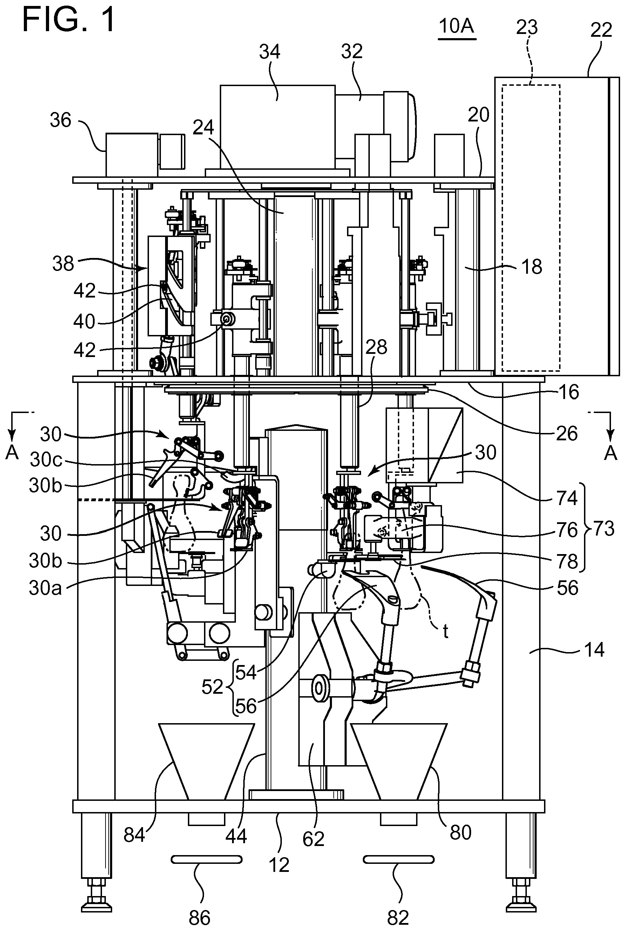

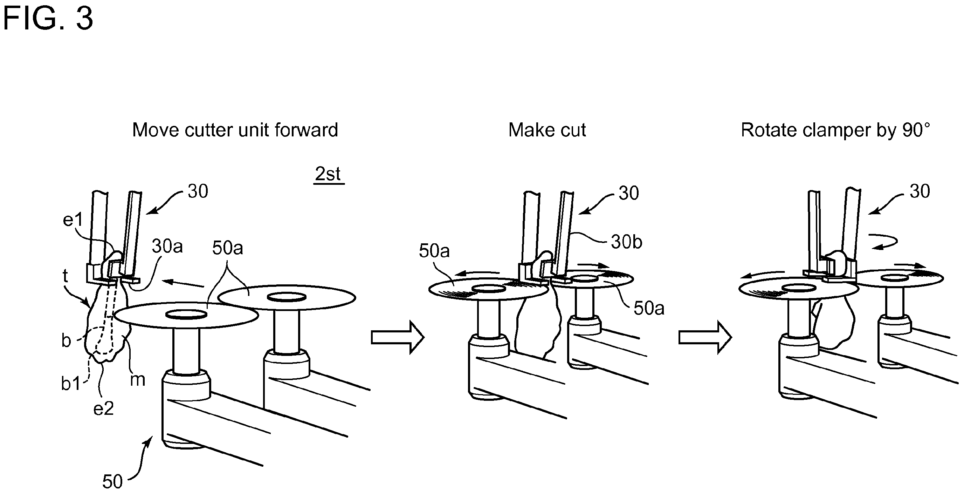

A deboning apparatus 10A according to at least one embodiment of the present invention performs a deboning process of separating a meat portion m from a bone portion b of a piece of bone-in meat t which has a bone head b1 least at in one end, as illustrated in FIGs. 1 to 10 (for instance, the piece of bone-in meat t is a chicken drumette, which is an upper segment of a chicken wing separated from a breast portion a chicken carcass at a shoulder and from which a tip segment of the chicken wing is removed at a joint to a middle segment of the chicken wing; see FIG. 3 for example).

The deboning apparatus 10A includes a clamper 30 to hold the first end e1 (e.g. a joint to the middle segment of the chicken wing in the case of a chicken drumette) of the piece of bone-in meat t, and the piece of bone-in meat t is deboned while being suspended from the clamper 30.

The deboning apparatus 10A further includes a cutter unit 50 (the first cutter), a meat separator 52 (a meat-portion peeling member), an elastic support part which supports the meat separator 52 elastically, a clamper lift driving part 38 (meat-portion peeling driving part), and a round cutter 78 (the second cutter).

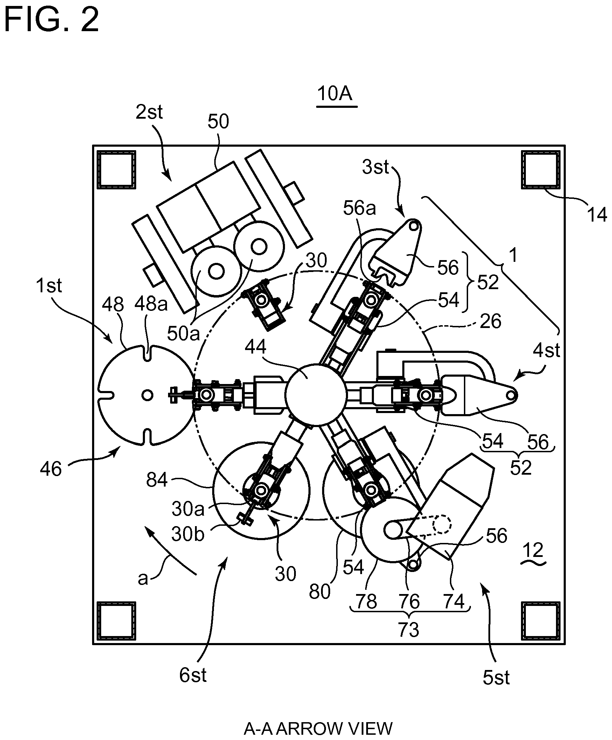

As illustrated in FIG. 2, the cutter unit 50 is capable of moving toward and away from the piece of bone-in meat t held by the clamper 30 at the first end e1, and makes a cut c in the circumferential direction on a meat portion in the vicinity of the held section of the piece of bone-in meat t in an earlier stage of the deboning process.

The meat separator 52 is insertable into the cut c of the piece of bone-in meat t held by the clamper 30, and the clamper lift driving part 38 is capable of changing the distance between the clamper 30 and the meat separator 52. It is possible to peel the meat portion m from the bone portion b by increasing the distance between the clamper 30 and the meat separator 52 by the clamper lift driving part 38 while the meat separator 52 is inserted into the cut c.

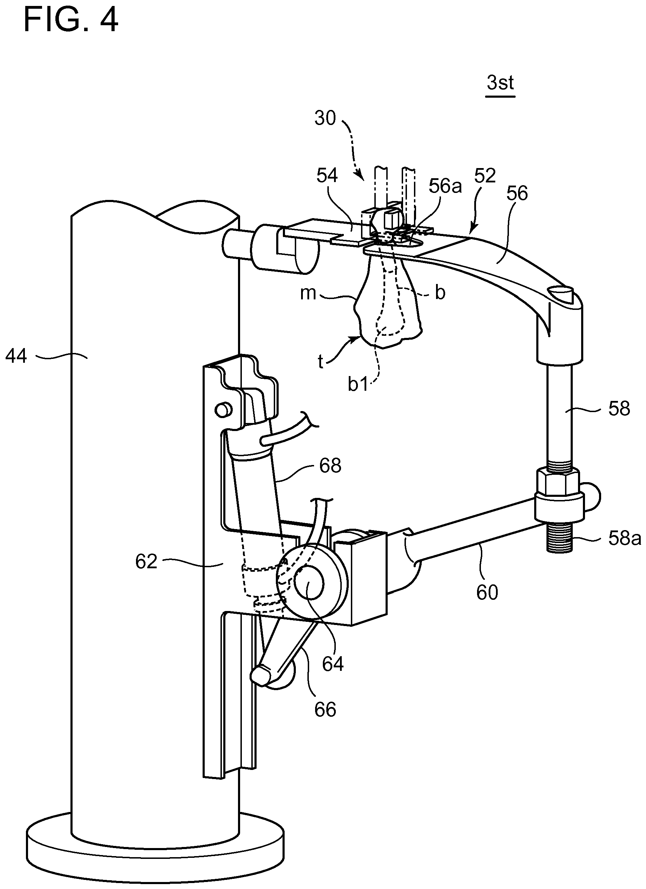

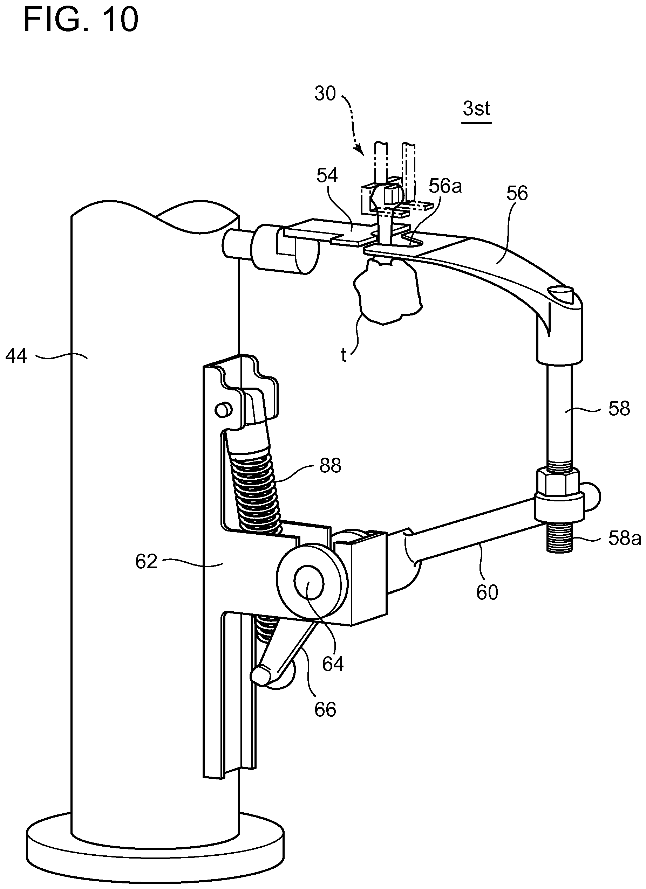

The above elastic support part supports the meat separator 52 elastically so that the meat separator 52 applies an elastic force to the piece of bone-in meat t. In an exemplary embodiment, the elastic support part is an air cylinder 68 illustrated in FIG. 4, or a compression spring 88 illustrated in FIG. 10.

The round cutter 78 is capable of moving toward and away from the piece of bone-in meat t held by the clamper 30, and cuts off the meat portion m adhering to the second end e2 of the piece of bone-in meat t including the bone head b1.

A control board 23 activates the round cutter 78 to cut off the meat portion adhering to the second end e2 when the second end e2 of the piece of bone-in meat t reaches the meat separator 52.

In the exemplary embodiment, the meat separator 52 includes a pair of a fixed separator 54 and a movable separator 56 which can move toward and away relative to each other, and inserts the separators into the cut c to peel the meat portion m off from the bone portion b. The deboning apparatus further includes the control board 23 (controller) and a detection part for detecting the distance between the fixed separator 54 and the movable separator 56. The distance is also referred to as a "separator distance" hereinafter.

The control board 23 moves the round cutter 78 toward the piece of bone-in meat t and cuts off the meat portion m adhering to the second end e2 when the separator distance reaches a threshold value or less.

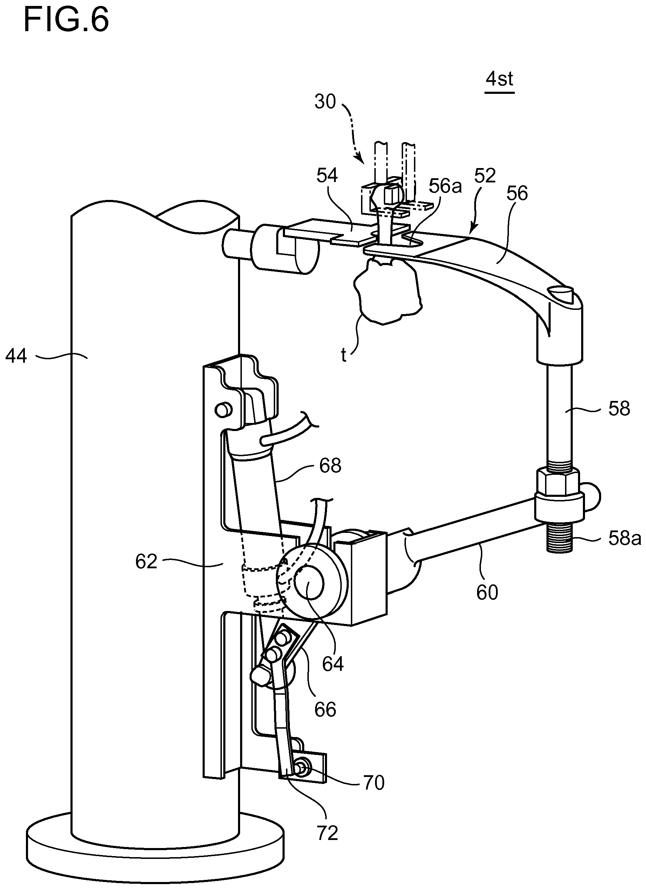

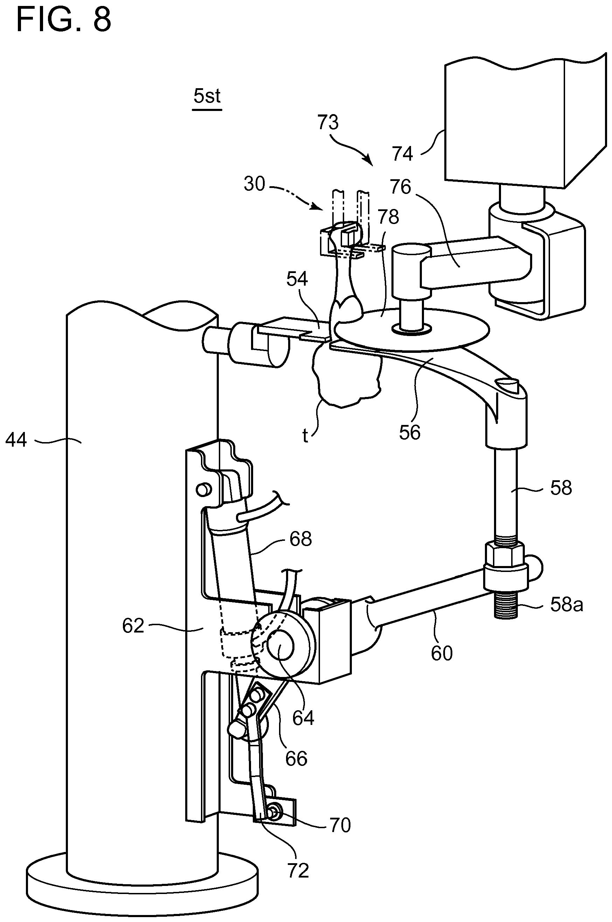

In the illustrated embodiment, the detection part includes a proximity sensor 70 and a dog (detection object) 72 as illustrated in FIGs. 6 and 8. One of the proximity sensor 70 or the dog 72 is disposed on a fixed section and the other one is mounted to the movable separator 56.

The control board 23 determines the separator distance to be at the threshold value or less when the proximity sensor 70 detects or does not detect the dog 72, and moves the round cutter 78 toward the piece of bone-in meat t to cut off the meat portion m adhering to the second end e2.

In the illustrative embodiment, as illustrated in FIGs. 1 and 2, the deboning apparatus 10A further includes a main motor 32 (rotational driving part) which rotates the clamper 30 about a rotational shaft 24. The clamper 30 travels along a circular track centered at the rotational shaft 24. Along the circular track, at least a cut-making part 2st, a meat-portion peeling part I, and a bone-meat separating part 5st are disposed.

In the illustrated embodiment, as illustrated in FIG. 2, the meat-portion peeling part I includes the first meat-portion peeling part 3st and the second meat-portion peeling part 4st. At the first meat-portion peeling part 3st, the meat portion m is peeled to an intermediate position in the axial direction of the bone portion b of the piece of bone-in meat t (the intermediate position is a joint in the case of a chicken drumette). At the second meat-portion peeling part 4st, the meat portion m is peeled from the intermediate position to the other end e2.

As illustrated in FIG. 3, the cut-making part 2st includes the cutter unit 50 having a pair of round cutters 50a, 50b capable of moving toward and away from the piece of bone-in meat t held by the clamper 30 at the first end e1. The pair of round cutters 50a, 50a makes the cut c in the circumferential direction on the meat portion in the vicinity of the first end e1 held by the clamper 30.

As illustrated in FIGs. 4 to 7, the first meat-portion peeling part 3st and the second meat-portion peeling part 4st include a meat separator 52, moves the clamper 30 upward while the cut c of the piece of bone-in meat t is nipped by the separators 54, 56, and peels the meat portion m of the piece of bone-in meat t. Further, the elastic support part supports the movable separator 56 elastically so that the movable separator 56 contacts the piece of bone-in meat t while applying an elastic force to the piece of bone-in meat t.

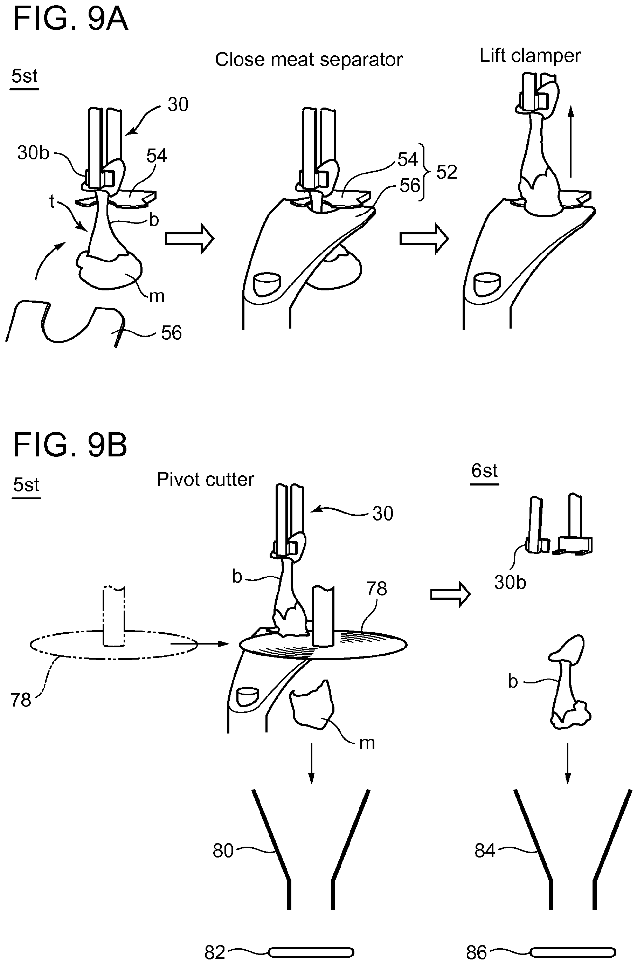

As illustrated in FIGs. 8 and 9, the bone-meat separating part 5st includes the meat separator 52 and a round cutter 78. At the bone-meat separating part 5st, the meat portion m adhering to the second end e2 is cut off from the second end e2 of the piece of bone-in meat t by the round cutter 78 at the timing when the second end e2 passes through a space between the separators 54, 56. Further, the detection signal issued by the proximity sensor 70 of the detection part for detecting the separator distance is inputted to the control board 23, and the control board 23 moves the round cutter 78 toward the piece of bone-in meat t and cuts off the meat portion m adhering to the second end e2 at the timing when the separator distance reaches a threshold value or less.

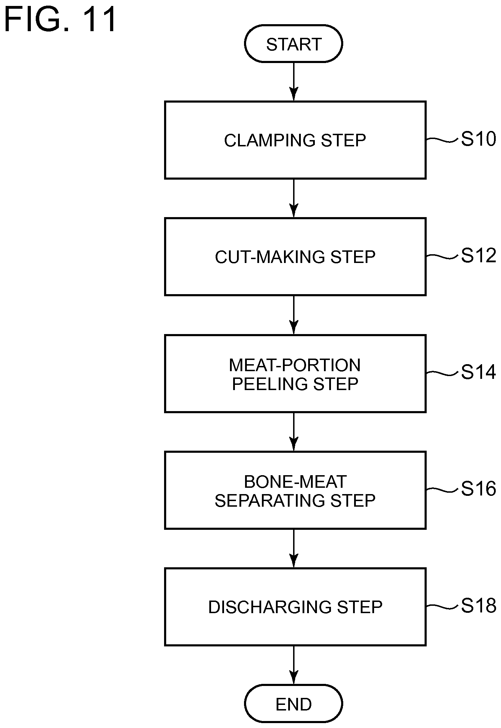

As illustrated in FIG. 11, a deboning method according to at least one embodiment of the present invention includes a clamping step S10, a cut-making step S12, a meat-portion peeling step S14, and a bone-meat separating step S16.

In the clamping step S10, the clamper 30 holds the first end e1 of the piece of bone-in meat t.

In the cut-making step S12, the cut c is made in the circumferential direction on a meat portion in the vicinity of the held section of the piece of bone-in meat t held by the clamper 30 at the first end e1.

In the meat-portion peeling step S14, the distance between the clamper 30 and the meat separator 52 is increased while the cut c of the piece of bone-in meat t is nipped by the meat separator 52 to peel the meat portion m from the bone portion b of the piece of bone-in meat t. In an illustrative embodiment, the clamper 30 is lifted by the clamper lift driving part 38 and the distance between the clamper 30 and the meat separator 52 is increased.

In the bone-meat separating step S16, the meat portion m adhering to the second end e2 is cut off from the second end e2 when the second end e2 including the bone head b1 of the piece of bone-in meat t passes through the meat separator 52.

In the meat-portion peeling step S14, at least one member of the meat separator 52 is elastically supported so that the meat separator 52 contacts the piece of bone-in meat t while applying an elastic force to the piece of bone-in meat t.

In an illustrative embodiment, as illustrated in FIG. 11, the method further includes a discharging step S18 of discharging the bone portion b and the meat portion m individually from the deboning apparatus 10A, after the bone-meat separating step S16.

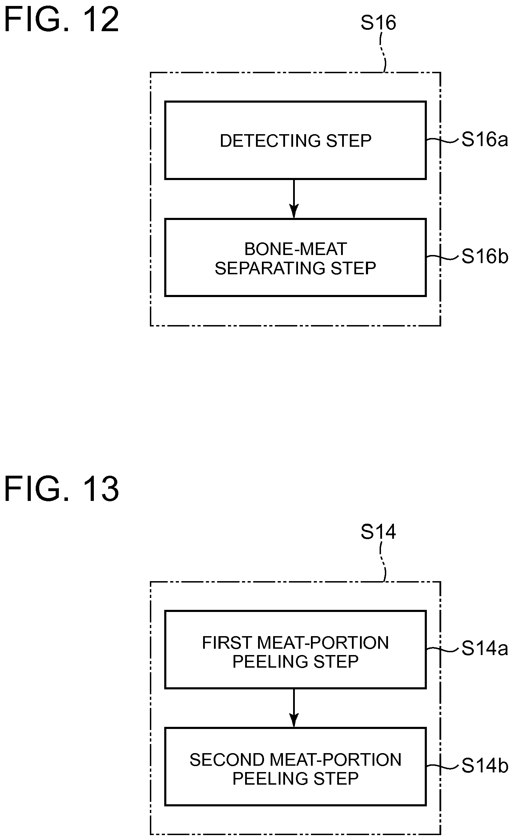

In an illustrative embodiment, as illustrated in FIG. 12, the meat separator 52 is constituted by a pair of separators including the fixed separator 54 and the movable separator 56. The bone-meat separating step S16 includes a detecting step S16a of detecting the separator distance, and a bone-meat separating step S16b of cutting off the meat portion m adhering to the second end e2 when the separator distance reaches a threshold value or less.

In an illustrative embodiment, as illustrated in FIG. 13, the meat-portion peeling step S14 includes the first meat-portion peeling step S14a and the second meat-portion peeling step S14b. In the first meat-portion peeling step S14a, the meat portion m is peeled to an intermediate position in the axial direction of the bone portion b of the piece of bone-in meat t (the intermediate position is a joint in the case of a chicken drumette). In the second meat-portion peeling step S14b, the meat portion m is peeled from the intermediate position in the axial direction to the second end e2.

Further, as an illustrative embodiment, the deboning apparatus 10A includes four lower pillars 14 standing on four corners of an upper surface of a mount base 12, and a lower base plate 16 of a quadrate shape horizontally fixed to upper ends of the lower pillars 14, as illustrated in FIG. 1. Further, four upper pillars 18 are disposed so as to stand on four corners of an upper surface of the lower base plate 16, and an upper base plate 20 of a quadrate shape is horizontally fixed to the upper ends of the upper pillars 18, thereby forming a framework.

A control box 22 housing the control board 23 is disposed on the lower base plate 16 at a side of the upper base plate 20. The rotational shaft 24 is disposed so as to stand in the middle of the lower base plate 16, and a rotational base 26 of a disc shape is coupled to the lower end of the rotational shaft 24. The rotational base 26 is disposed horizontally in the vicinity of the lower surface of the lower base plate 16, and six lifting shafts 28 are disposed so as to extend downward from the outer rim of the rotational base 26 at regular intervals in the circumferential direction. The clamper 30 is mounted to a lower end of each of the lifting shafts 29. Six processing parts are disposed in a circular shape and at regular intervals on the mount base 12, while as many lifting shafts 28 as the processing parts are provided.

The main motor 32 is disposed on the upper base plate 20, and the output of the main motor 32 is transmitted to the rotational shaft 24 and the rotational base 26 via the power transmitting part 34. The rotational base 26 performs intermittent rotational motion in which the clamper 30 moves through the processing parts at a constant speed and stops at the processing parts for a predetermined period.

Further, a loader motor 36 is disposed on the upper base plate 20. The loader motor 36 drives the following loader 46 to rotate in synchronization with the rotational base 26.

A lift mechanism 38 for lifting the lifting shafts 28 is disposed between the lower base plate 16 and the upper base plate 20. Rollers 42 are integrally provided on the lifting shafts 28. The rollers 42 travel on a guide groove 40 formed on the lift mechanism 38. In regions between the processing parts, the lifting shafts 28 move upward and downward in accordance with the upward-and-downward movement of the rollers 42 traveling on the guide groove 40, while moving around in the circumferential direction. Furthermore, at each processing part, the lifting shafts 28 are moved upward and downward by a lift unit constituted by combination of a servomotor and a ball screw. Specifically, each lifting shaft 28 is configured integrally with a lift base screwed to a ball screw, and moves upward and downward when the servomotor revolves the ball screw. In this way, the amount of upward-and-downward movement of the clamper 30 required for the process at each of the processing parts is secured (see Japanese Patent Application Publication No. 2013-255471 for details of the lift unit).

Further, as illustrated in FIG. 2, a pillar 44 is disposed so as to stand at the center of the upper surface of the mount base 12, and various devices constituting the respective processing parts are mounted to the pillar 44.

The six processing parts 1st to 6st are disposed in a circular shape at regular intervals around the pillar 44. The clamper 30 includes a recessed portion 30a and holds the first end e1 of the piece of bone-in meat t with the recessed portion 30a. The opening of the recessed portion 30a is configured to be covered by a shield bar 30b. The shield bar 30b is operated by a clamper opening-and-closing part 30c which receives commands from the control board 23.

The rotational base 26 and the clamper 30 rotate intermittently in the direction of arrow a, and the clamper 30 stops for a predetermined period when reaching each processing part. While the clamper 30 is standing at each processing part, the piece of bone-in meat t suspended from the clamper 30 undergoes a deboning process.

The loading part 1st includes a loader 46 having a loading disc 48 of a circular shape. Recessed portions 48a are formed on the circumferential edge of the loading disc 48 at intervals of 90° in the circumferential direction. The recessed portions 48a are configured such that a narrowed portion of the piece of bone-in meat t in the vicinity of the first end e1 is insertable into the recessed portions 48a, and have such a size that it is possible to lock the first end e1.

The loading disc 48 rotates intermittently by 90° each time. During rotation of the loading disc 48, the clamper 30 moves around intermittently by 60°, and stops for a predetermined period while the recessed portion 30a and one of the recessed portions 48a are facing each other at a synchronized timing. While the clamper 30 is at a stop, the piece of bone-in meat t is pushed out from the recessed portion 48a into the recessed portion 30a by a pusher (not illustrated). After the piece of bone-in meat t is pushed into the recessed portion 30a, the control board 23 operates the shield bar 30b to close the recessed portion 30a. In this way, the piece of bone-in meat t is held by the clamper 30, and then the clamper 30 moves around by 60 ° to arrive at the cut-making part 2st.

As illustrated in FIG. 2, at the cut-making part 2st, the round cutters 50a, 50a are configured to be capable of advancing to and retarding from the clamper 30 by an air cylinder (not illustrated).

As illustrated in FIG. 3, the round cutters 50a, 50a are disposed in a horizontal direction at a height at which the round cutters 50a can make a cut on the piece of bone-in meat t positioned immediately below the clamping position by moving in the horizontal direction toward the clamper 30. The distance between the round cutters 50a, 50a is such that the round cutters 50a, 50a can make a cut on a meat portion of the piece of bone-in meat t immediately below the clamping position.

Then, the round cutters 50a, 50a approach the piece of bone-in meat t, and make the cut c in the circumferential direction on a meat portion of the piece of bone-in meat t immediately below the clamping position. The clamper 30 is configured to be capable of being revolved by 90° by the clamper lift driving part 38, and is revolved by 90° during operation of the round cutters 50a, 50a. In this way, it is possible to make a cut along the entire periphery of the meat portion of the piece of bone-in meat t. After this operation, the cutter unit 50 retards from the piece of bone-in meat t. Then, the clamper 30 starts moving to arrive at the first meat-portion peeling part 3st.

As illustrated in FIG. 2, at the first meat-portion peeling part 3st, the second meat-portion peeling part 4st and the bone-meat separating part 5st, the fixed separator 54 is fixed to the pillar 44, and a recessed portion 56a for housing the first end e1 of the piece of bone-in meat t is formed on a tip end of the movable separator 56. The first end e1 is held from both sides by the fixed separator 54 and the movable separator 56.

As illustrated in FIG. 4, a fixed block 62 is mounted to the pillar 44 below the fixed separator 54, a support shaft 64 is supported rotatably on the fixed block 62, and the movable separator 56 is coupled to the support shaft 64 via arms 58 and 60. An arm 66 having a certain relative angle to the arm 60 is mounted to the support shaft 64, and the air cylinder 68 is disposed between the fixed block 62 and the arm 66. An elastic force is applied to the movable separator 56 by the air cylinder 68 in a direction toward the fixed separator 54.

The arm 58 is screwed to the arm 60 at a screw portion 58a, so that a connecting position to the arm 60 is adjustable in the longitudinal direction.

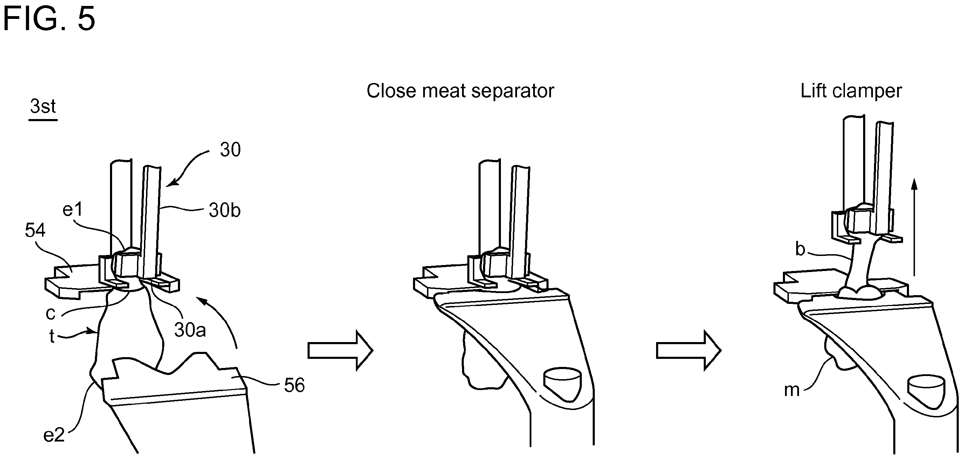

As illustrated in FIG. 5, at the first meat-portion peeling part 3st, the fixed separator 54 and the movable separator 56 are inserted into the cut c of the piece of bone-in meat t from both sides, and then the clamper 30 is lifted upward by a predetermined amount. Due to the ascent of the clamper 30, the meat portion m is peeled off from the bone portion b to an intermediate position (a joint in the case of a chicken drumette) of the entire length of the piece of bone-in meat t. At the first meat-portion peeling part 3st, the lifting amount of the clamper 30 is set constant for any piece of bone-in meat t without taking account of the individual difference in the lengths among the pieces of bone-in meat t, in order to simplify the apparatus configuration.

Next, compressed air is supplied to or discharged from the air cylinder 68 in response to a command from the control board 23, so as to retard the movable separator 56. Then, the clamper 30 is moved to the second meat-portion peeling part 4st.

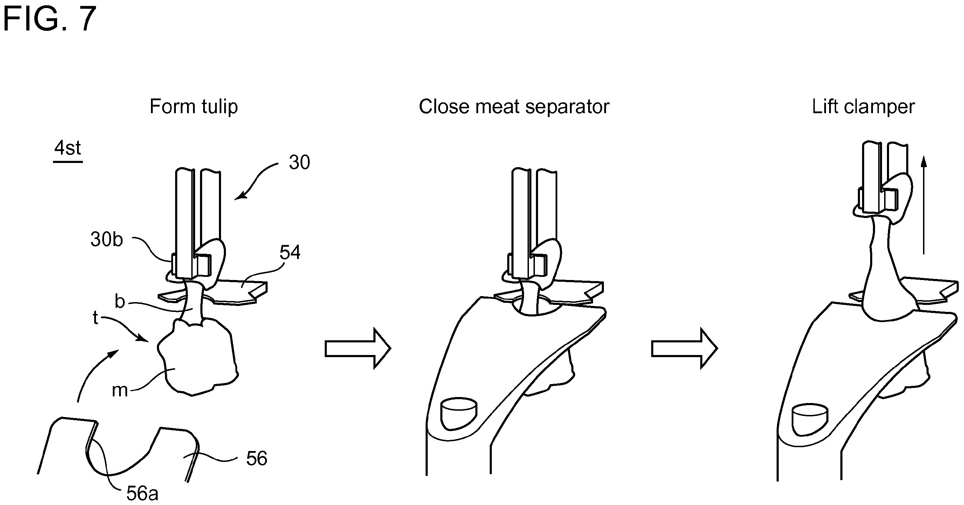

FIG. 6 illustrates a configuration of the second meat-portion peeling part 4st, and FIG. 7 illustrates a processing flow at the second meat-portion peeling part 4st. At the second meat-portion peeling part 4st, a lower half of the piece of bone-in meat t with an upper half having been deboned at the first meat-portion peeling part 3st is subsequently deboned, and thereby the meat portion m is peeled to the vicinity of the second end e2 from the bone portion b. Thus, the area of the recessed portion 50a of the movable separator 56 is enlarged in accordance with the shape of the bone portion near the second end e2.

As illustrated in FIG. 6, the proximity sensor 70 is disposed on a lower end of the fixed block 62, and the dog 72 is fixed to the arm 66. The dog 72 is arranged so as to pass in front of the proximity sensor 70 in accordance with the movement of the movable separator 56.

When the separator distance is not more than a threshold value, an ON signal indicating detection of the dog 72 by the proximity sensor 70 is inputted into the control board 23. When the separator distance exceeds a threshold value, an OFF signal indicating absence of detection of the dog 72 by the proximity sensor 70 is inputted into the control board 23. The other configuration is similar to that of the first meat-portion peeling part 3st.

As illustrated in FIG. 7, the bone portion b after peeling the meat portion is nipped by the meat separator 52, and then the clamper 30 is moved upward. As the piece of bone-in meat t ascends, the bone portion b that the meat separator 52 holds becomes gradually thicker, and thus the separator distance gradually increases. When the distance exceeds the threshold value, the OFF signal is inputted into the control board 23. The control board 23 determines that the holding position of the meat separator 52 has reached the second end e2 when the separator distance exceeds the threshold value.

When the OFF signal is inputted into the control board 23, the control board 23 stops the ascent of the clamper 30. Next, the control board 23 activates the air cylinder 68 to retard the movable separator 56, and the clamper 30 moves to the bone-meat separating part 5st.

FIG. 8 illustrates the configuration of the bone-meat separating part 5st. The bone-meat separating part 5st includes a motor box 74 with a built-in drive motor. The motor box 74 includes a power transmitting part 76 to which a round cutter 78 is mounted. The output of the drive motor is transmitted to the round cutter 78 via the power transmitting part 76. The power transmitting part 76 is mounted to the motor box 74 so as to be pivotable in a direction toward or away from the clamper 30 within a horizontal plane. The round cutter 78 has a blade surface extending within the horizontal plane, and is disposed at a height in the vicinity of the upper surfaces of the separators 54, 56. The motor box 74, the power transmitting part 76, and the round cutter 78 constitute a cutting mechanism 73. The other configuration is similar to that of the second meat-portion peeling part 4st illustrated in FIG. 6.

As illustrated in FIG. 9A, at the final separating part 5st, the deboning process performed at the second meat-portion peeling part 4st is continued. That is, the clamper 30 is lifted further up while the meat separator 52 is holding the first end e1. When the second end 2 comes into the position of the holding section of the meat separator 52, the separator distance exceeds a threshold value. At this time, the proximity sensor 70 transmits an OFF signal to the control board 23. When the separator distance becomes not more than a threshold value, an ON signal of the proximity sensor 70 is inputted into the control board 23. When receiving the ON signal of the proximity sensor 70, the control board 23 determines that the separator distance has become not more than the threshold value and that the meat separator 52 has passed through the second end e2, and stops the ascent of the clamper 30.

Next, as illustrated in FIG. 9B, the round cutter 78 approaches the piece of bone-in meat t at a stop, and cuts off the meat portion m adhering to the bone portion of the second end e2 from the bone portion b.

The meat portion m having been cut off is discharged into a discharge hopper 80 (see FIG. 1) disposed on the mount base 12 below the bone-meat separating part 5st. The meat portion m falls onto a conveyor 82 from the discharge hopper 80 to be transferred to the next process. The clamper 30 holding the bone portion b from which the meat portion m has been removed moves to a discharging part 6st.

At the discharging part 6st, the command from the control board 23 activates the shield bar 30b so as to open the opening of the recessed portion 30a. The bone portion b held by the clamper 30 falls down from the opening into a discharge hopper 84 disposed on the mount base 12 below. The bone portion b further falls onto a conveyor 86 from the discharge hopper 84 to be transferred outside.

According to the present embodiment, at the meat-portion peeling part I, the meat separator 52 is in contact with the piece of bone-in meat t while applying an elastic force to the piece of bone-in meat t. Thus, when the piece of bone-in meat t suspended from the clamper 30 ascends, it is possible to reduce the risk that the meat separator 52 damages the periostea and gristle adhering to the bone portion b, and also to separate the meat portion m with a high yield.

Further, since the movable separator 56 is supported elastically by the elastic support part, an excessive force is not applied to the second end e2 when the second end e2 passes through the space between the separators 54, 56 even if the second end e2 has a large diameter. Thus, there is no risk of damaging the bone head b1 or the like, which eliminates the risk that bone fragments get mixed into the meat portion m and deteriorate the product value of boneless meat.

Further, at the bone-meat separating part 5st, the meat portion m adhering to the second end e2 is cut off from the second end e2 by the round cutter 78 at the timing when the second end e2 passes through the space between the two separators 54, 56, which makes it possible to improve the yield obtained from each meat portion even if the pieces of bone-in meat vary in length.

Further, at the bone-meat separating part 5st, the proximity sensor 70 and the control board 23 are provided, and the meat portion m adhering to the second end e2 is cut off from the bone portion b at the timing when the second end e2 passes through the space between the two separators 54, 56, which makes it possible to automate bone-in meat and to improve the yield obtained from the meat portion of each piece of bone-in meat even if the lengths are varied among the pieces of bone-in meat t.

Further, since the detection part for detecting the timing that the second end e2 passes through the space between the separators 54, 56 includes the proximity sensor 70 and the dog 72, it is possible to simplify the detection part and reduce the cost of the same.

The timing at which the second end e2 passes through the separators 54, 56 may be detected without using the control board 23. For instance, the separators 54, 56 and the round cutter 78 may be operated in conjunction using a link mechanism or the like, so that the round cutter 78 is operated in accordance with the motion of the separators 54, 56 at the time when the separators 54, 56 pass by the second end e2.

Further, since the elastic support part disposed on the meat-portion peeling part I includes the air cylinder 8 or the compression spring 88, it is possible to simplify the elastic support part and reduce the cost of the same.

Further, since the clamper 30 is moved through the processing parts in sequence along the circular track around the rotational shaft 24, it is possible to provide the processing parts in a fixed state, which makes it possible to simplify the configuration of each processing part and reduce the cost of the same, as well as improving the processing efficiency.

Further, since the meat-portion peeling part I is separated into the first meat-portion peeling part 3st and the second meat-portion peeling part 4st, it is possible to produce tulip-shaped chicken sticks through the process at the first meat-portion peeling part 3st in a case in which the piece of bone-in meat t is a chicken drumette. Alternatively, it is possible to separate the meat portion m entirely by cutting off the meat portion m from the bone portion b further at the second meat-portion peeling part 4st. In other words, it is possible to choose between production of tulip-shaped chicken sticks and complete separation of the meat portion m.

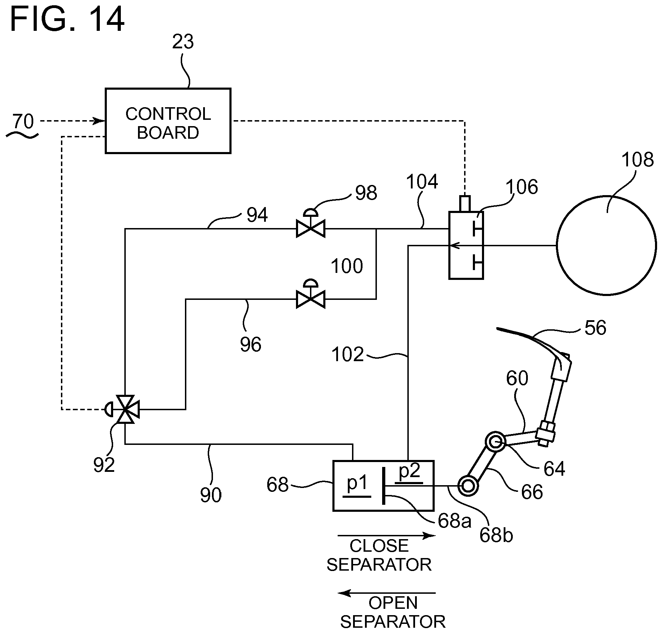

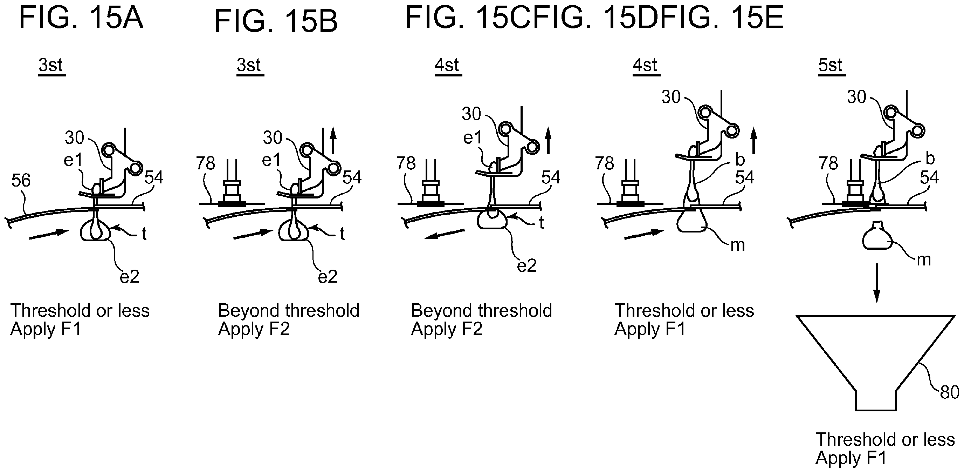

In another illustrative embodiment, as illustrated in FIGs. 14 and 15, the elastic support part is capable of changing the elastic force that the pair of meat-portion peeling members, which are the fixed separators 54 and the movable separator 56, apply to the piece of bone-in meat t.

Specifically, at the meat-portion peeling part I, the control board 23 controls the elastic support part so that the elastic force applied to the piece of bone-in meat t is the first elastic force F1 when the distance between the pair of separators 54, 56 is not more than a threshold value, and so that the elastic force is the second elastic force F2 that is smaller than the first elastic force F1 when the distance between the separators 54, 56 exceeds the threshold value.

In the illustrative embodiment, the elastic support part includes: the air cylinder 68 for supporting at least one of the meat-portion peeling members, for instance, the movable separator 56 elastically; a main pressurized-air supply channel 90 connected to the air cylinder 68; a three-way valve 92 disposed in the main pressurized-air supply channel 90; two pressurized-air supply channels 94, 96 connected switchably to the main pressurized-air supply channel 90 via the three-way valve 92, and pressure-adjustment valves 98, 100 disposed in the pressurized-air supply channels 94, 96.

The control board 23 controls the three-way valve 92 so that the elastic force applied to the movable separator 56 is the first elastic force F1 when the separator distance is not more than a threshold value, and the elastic force applied to the movable separator 56 is the second elastic force F2 when the separator distance exceeds the threshold value.

In an illustrative configuration, the air cylinder 68 has a piston 68a connected to the movable separator 56 via a piston rod 68b, an arm 66, a support shaft 64, and the arm 60. The main pressurized-air supply channel 90 is connected to an air chamber p1 of the air cylinder 68, and another pressurized-air supply channel 102 is connected to the other air chamber p2 of the air cylinder 68.

The pressurized-air supply channels 94, 96 merge into a pressurized-air supply channel 104 at the upstream side, and the pressurized-air supply channels 102, 104 are connected to a pressurized-air supply source 108 via a switch valve 106.

The pressurized air flowing through the pressurized-air supply channel 94 has a pressure that is set by the pressure-adjustment valve 98 to be higher than a pressure in the pressurized-air supply channel 96. The first elastic force F1 is applied to the movable separator 56 when pressurized air is supplied to the air chamber p1 via the pressurized-air supply channel 94. The second elastic force F applied to the movable separator 56 when pressurized air is supplied to the air chamber p1 via the pressurized-air supply channel 96 is smaller than F1.

The separator distance decreases when pressurized-air is supplied to the air chamber p1 of the air cylinder 68, and the separator distance increases when pressurized-air is supplied to the air chamber p2.

The position of the clamper 30 moving along the circular track centered at the rotational shaft 24 is detected by an encoder (not illustrated), and the control board 23 switches the switch valve 106 on the basis of the position of the clamper 30, i.e., on the basis of which processing part the clamper 30 is positioned at, so as to supply pressurized-air selectively to the air chamber p1 or p2.

FIGs. 15A to FIG. 15E illustrate the movement of the clamper 30 and the movable separator 56 from the first meat-portion peeling part 3st to the bone-meat separating part 5st.

FIG. 15A illustrates the beginning of the bone-meat separation at the first meat-portion peeling part 3st. The separators 54, 56 nip a position in the vicinity of the first end e1. At this time, the separator distance is not more than a threshold value, and the first elastic force F1 is applied to the piece of bone-in meat t.

FIG. 15B illustrates the beginning of the ascent of the clamper 30, where the bone portion b that the separators 54, 56 contact gets thicker so that the separator distance exceeds the threshold value in the latter half of the ascent of the clamper 30, and the second elastic force F2 is applied to the movable separator 56.

FIG. 15C illustrates the second meat-portion peeling part 4st, where the bone portion b that the separators 54, 56 contact gets even more thicker and the second elastic force F2 is continuously applied.

FIG. 15D illustrates the second end e2 passing through the separators 54, 56 so that the separator distance becomes not more than the threshold value and the first elastic force F1 is applied to the movable separator 56.

FIG. 15E illustrates the bone-meat separating part 5st, where the meat portion m is cut off by the round cutter 78 from the second end e2 and falls into the discharge hopper 80, while the first elastic force F1 is applied to the movable separator 56.

According to the present embodiment, it is possible to apply the first elastic force F1, which is large, to the piece of bone-in meat t in the beginning of the peeling in the first meat-portion peeling step S14a when the separator distance becomes not more than the threshold value and in the bone-meat separating step S16. In this way, it is possible to support the piece of bone-in meat t stably and determine positions such as the cutting position precisely.

Furthermore, the second elastic force F2, which is smaller than the first elastic force F1, is applied to the piece of bone-in meat t during peeling of the meat portion when the separator distance exceeds the threshold value, which makes it possible to prevent breakage of bones and to reduce the risk of damaging the periostea and gristle on the bone portion b. In this way, it is possible to eliminate the risk that bone fragments get mixed into the meat portion m and deteriorate the product value of boneless meat.

Further, it is possible to alter the elastic force applied to the piece of bone-in meat t by the separators 54, 56 between two stages during operation of the deboning apparatus with a simplified and low-cost configuration.

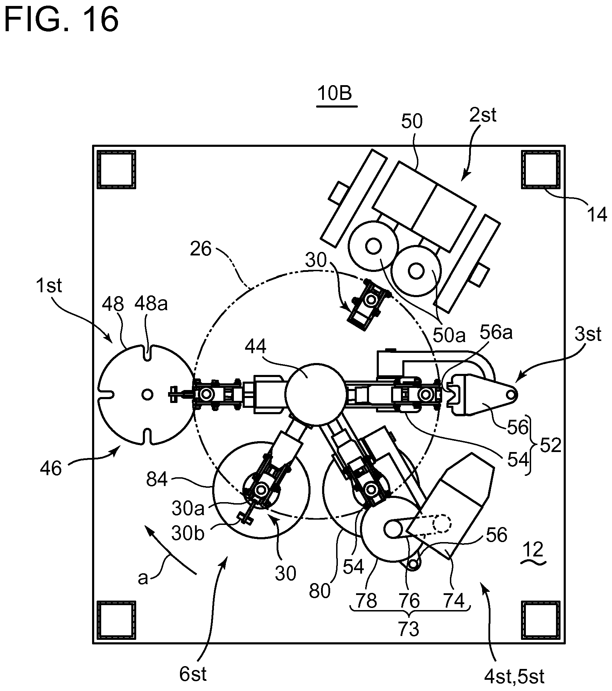

Next, with reference to FIG. 16 (corresponding to FIG. 2), a configuration of a deboning apparatus 10B according to an embodiment will be described, in which the deboning apparatus 10A in FIGs. 1 and 2 is modified to reduce the cost even further.

As illustrated in FIG. 16, in the deboning apparatus 10B, the cut-making part 2st is disposed at the position of the first meat-portion peeling part 3st of the deboning apparatus 10A, the first meat-portion peeling part 3st is disposed at the position of the second meat-portion peeling part 4st of the deboning apparatus 10A, and the bone-meat separating part 5st also functions as the second meat-portion peeling part 4st of the deboning apparatus 10A.

Specifically, at the bone-meat separating part 5st of the deboning apparatus 10B, the second meat-portion peeling step S14b illustrated in FIG. 13 and the bone-meat separating step S16 illustrated in FIG. 11 are performed.

At the first meat-portion peeling part 3st, the separator distance is not detected and is set to a fixed value, because the thickness of the bone portion from the first end e1 to the intermediate position is not substantially varied among different pieces of bone-in meat.

On the other hand, at the second meat-portion peeling part 4st, the separator distance is detected by the proximity sensor 70 for each piece of bone-in meat, similarly to the deboning apparatus 10A.

With the deboning apparatus 10B according to the present embodiment, it is possible to reduce the number of stations as compared to the deboning apparatus 10A, and to dispense with the detection part for detecting the separator distance at the first meat-portion peeling part 3st. Further, to make the bone-meat separating part 5st function also as the second meat-portion peeling part 4st of the deboning apparatus 10A, it is not necessary to provide an additional component. Thus, it is possible to reduce the installation cost as compared to the deboning apparatus 10A.

Further, it is possible to restrict damage to the bone portion b and reduction of the yield of the meat portion m within an allowable range even with the threshold value being a fixed value at the first meat-portion peeling part 3st, because the thickness of the bone from the first end e1 to the intermediate portion is not substantially varied among different pieces of bone-in meat.

### Industrial Applicability

According to the present invention, when a piece of bone-in meat is to be deboned, it is possible to peel a meat portion without damaging a bone portion but with a high yield. Further, it is possible to peel a meat portion from a bone portion with a high yield even if pieces of bone-in meat vary in lengths, and there is no risk of breakage of bone heads or the like, which prevents bone fragments from being mixed into a meat portion to deteriorate the product value of boneless meat.

### Description of Reference Numeral

- 10A, 10B: Deboning apparatus
- 12: Mount base
- 22: Control box
- 23: Control board
- 24: Rotational shaft
- 26: Rotational base
- 28: Lifting shaft
- 30: Clamper
- 32: Main motor
- 34,: 76 Power transmitting part
- 36: Loader motor
- 38: Clamper lift driving part
- 40: Guide groove
- 42: Roller
- 44: Pillar
- 46: Loader
- 48: Loading disc
- 50: Cutter unit (first cutter)
50a Round cutter
- 52: Meat separator (Meat-portion peeling member)
54 Fixed separator
56 Movable separator
- 58, 60, 66: Arm
58a Screw part
- 62: Fixed block
- 64: Support shaft
- 68: Air cylinder
- 70: Proximity sensor (detection part)
- 72: Dog (detection object)
- 73: Cutting mechanism
- 74: Motor box
- 78: Round cutter (second cutter)
- 80, 84: Discharge hopper
- 82, 86: Conveyor
- 88: Compression spring
- 90: Main pressurized-air supply channel
- 92: Three-way valve
- 94, 96: Pressurized-air supply channel
- 98, 100, 102,104: Pressure-adjustment valve
- 106: Switch valve
- 108: Pressurized-air supply source
- 1st: Loading part
- 2st: Cut-making part
- 3st: First meat-portion peeling part
- 4st: Second meat-portion peeling part
- 5st: Bone-meat separation part
- 6st: Discharge part
- F1: First elastic force
- F2: Second elastic force
- I: Meat-portion peeling part
- b: Bone portion
- c: Cut
- e1: First end
- e2: Second end
- m: Meat portion
- p1, p2: Air chamber
- t: Bone-in meat

## Claims

1. A bone-in meat deboning apparatus (10A, 10B), comprising:
a clamper (30) for holding a piece of bone-in meat (t) having a first end (e1) and a second end (e2) and including a bone head at least in the second end (e2);
a first cutter (50) capable of moving toward and away with respect to the piece of bone-in meat (t) being held by the clamper (30) at the first end (e1), for making a cut (c) in a circumferential direction on a meat portion (m) of the piece of bone-in meat (t) in a vicinity of a held section of the piece of bone-in meat (t);
at least one meat-portion peeling member (52) which is insertable into the cut (c) on the piece of bone-in meat (t) being held by the clamper (30) and comprises a pair of meat-portion peeling members (54, 56) which are movable toward and away relative to each other;
an elastic support part (68, 88) for elastically supporting the at least one meat-portion peeling member (52) so that the at least one meat-portion peeling member (52) applies an elastic force to the piece of bone-in meat (t);
a meat-portion-peeling driving part (38) capable of changing a distance between the clamper (30) and the at least one meat-portion peeling member (52); and
a second cutter (78) capable of moving toward and away with respect to the piece of bone-in meat (t) being held by the clamper (30), for cutting the meat portion (m) adhering to the second end (e2) including the bone head of the piece of bone-in meat (t),
**characterized by** further comprising:
a detection part for detecting a gap between the pair of meat-portion peeling members (54, 56); and
a control device (23) for cutting off the meat portion (m) adhering to the second end (e2) by moving the second cutter (78) toward the piece of bone-in meat (t) when the gap between the pair of meat-portion peeling members (54, 56) is at a threshold value or less.

2. The bone-in meat deboning apparatus (10A, 10B) according to claim 1,
wherein the detection part comprises a proximity sensor (70) and a detection object (72), one of the proximity sensor (70) and the detection object (72) being disposed on a fixed section of the bone-in meat deboning apparatus (10A, 10B) and other one of the proximity sensor (70) and the detection object (72) being attached to movable one (56) of the pair of meat-portion peeling members (54, 56), and
wherein the control device (23) is configured to determine that the gap between the pair of meat-portion peeling members (54, 56) is at the threshold value or less when the proximity sensor (70) detects the detection object (72) or when the proximity sensor (70) does not detect the detection object (72).

3. The bone-in meat deboning apparatus (10A, 10B) according to claim 1 or 2,
wherein the elastic support part (68, 88) is configured to change the elastic force to be applied to the piece of bone-in meat (t) by the pair of meat-portion peeling members (54, 56), and
wherein the control device (23) is configured to control the elastic support part (68, 88) so that the elastic force is a first elastic force (F1) when the gap between the pair of meat-portion peeling members (54, 56) is at the threshold value or less, and the elastic force is a second elastic force (F2) which is smaller than the first elastic force (F1) when the gap between the pair of meat-portion peeling members (54, 56) is greater than the threshold value.

4. The bone-in meat deboning apparatus according to claim 3,
wherein the elastic support part (68, 88) includes an air cylinder (68) for elastically supporting at least one of the pair of meat-portion peeling members (54, 56), a main pressurized air supply channel (90) connected to the air cylinder (68), a three-way valve (92) disposed in the main pressurized air supply channel (90), two pressurized air supply channels (94, 96) connected to the main pressurized air supply channel (90) via the three-way valve (92) so as to be switchable, and two pressure adjustment valves (98, 100) disposed on the two respective pressurized air supply channels (94, 96), and
wherein the control device (23) is configured to control the three-way valve (92) so that the elastic force is the first elastic force (F1) when the gap between the pair of meat-portion peeling members (54, 56) is at the threshold value or less, and the elastic force is the second elastic force (F2) when the gap between the pair of meat-portion peeling members (54, 56) is greater than the threshold value.

5. The bone-in meat deboning apparatus according to any one of claims 1 to 4, further comprising
a rotary driving part (32) for rotating the clamper (30) about a rotational axis (24),
wherein a cut-making part (2st) including the first cutter (50), a meat-portion peeling part (I) including the at least one meat-portion peeling member (52), and a bone-meat separating part (5st) including the second cutter (78) are arranged along a circular track of the clamper (30).

6. The bone-in meat deboning apparatus (10A, 10B) according to claim 5,
wherein the meat-portion peeling part (I) includes a first meat-portion peeling part (3st) configured to peel the meat portion (m) to an intermediate position in an axial direction of a bone portion (b) of the piece of bone-in meat (t), and a second meat-portion peeling part (4st) configured to peel the meat portion (m) from the intermediate position in the axial direction of the bone portion (b) of the piece of bone-in meat (t) to the second end (e2).

7. The bone-in meat deboning apparatus (10A, 10B) according to claim 6,
wherein the control device (23) is configured such that the gap between the pair of meat-portion peeling members (54, 56) is not detected and set to a fixed value at the first meat-portion peeling part (3st), and
wherein the second meat-portion peeling part (4st) is disposed in the bone-meat separating part (5st).

8. The bone-in meat deboning apparatus (10A, 10B) according to claim 7,
wherein the control device (23) is configured such that the gap between the pair of meat-portion peeling members (54, 56) is detected by the detection part at the second meat-portion peeling part (4st).

9. A method of deboning bone-in meat, comprising:
a clamping step of holding a piece of bone-in meat (t) with a clamper (30), the piece of bone-in meat (t) having a first end (e1) and a second end (e2) and including a bone head at least in the second end (e2);
a cut-making step of making a cut (c) in a circumferential direction on a meat portion (m) of the piece of bone-in meat (t) in a vicinity of a held section of the piece of bone-in meat (t) held by the clamper (30) at the first end (e1);
a meat-portion peeling step of peeling the meat portion (m) of the piece of bone-in meat (t) by increasing a distance between the clamper (30) and at least one meat-portion peeling member (52) which comprises a pair of meat-portion peeling members (54, 56) which are movable toward and away relative to each other, using the meat-portion peeling member (52) inserted into the cut (c); and
a bone-meat separating step of cutting off the meat portion (m) adhering to the second end (e2) from the second end (e2) when the second end (e2) including the bone head of the piece of bone-in meat (t) reaches the at least one meat-portion peeling member (52) in the meat-portion peeling step,
wherein, in the meat-portion peeling step, the at least one meat-portion peeling member (52) is supported elastically so that the at least one meat-portion peeling member (52) contacts the piece of bone-in meat (t) while applying an elastic force to the piece of bone-in meat (t),
the method being **characterized in that** the bone-meat separating step includes:
a detecting step for detecting a gap between the pair of meat-portion peeling members (54, 56); and
a bone-meat separating step of cutting off the meat portion (m) adhering to the second end (e2) when the gap between the pair of meat-portion peeling members (54, 56) is at a threshold value or less.

10. The method of deboning bone-in meat according to claim 9,
wherein, in the meat-portion peeling step, the elastic force is set to a first elastic force (F1) when the gap between the pair of meat-portion peeling members (54, 56) is at the threshold value or less, and the elastic force is set to a second elastic force (F2) which is smaller than the first elastic force (F1) when the gap between the pair of meat-portion peeling members (54, 56) is greater than the threshold value.

11. The method of deboning bone-in meat according to any one of claims 9 or 10,
wherein the piece of bone-in meat (t) includes an upper segment of a chicken wing of a chicken carcass which is closer to a body and from which a tip segment of the chicken wing is separated, the segment being separated from a breast at a shoulder of the chicken carcass.

## Patentansprüche

1. Entbeinungseinrichtung (10A, 10B) für knochenenthaltendes Fleisch, die Folgendes umfasst:
einen Klemmer (30) zum Halten eines Stücks von knochenenthaltendem Fleisch (t), das ein erstes Ende (e1) und ein zweites Ende (e2) aufweist und mindestens im zweiten Ende (e2) einen Knochenkopf beinhaltet;
einen ersten Schneider (50), der in der Lage ist, mit Bezug auf das Stück von knochenenthaltendem Fleisch (t), das vom Klemmer (30) am ersten Ende (e1) gehalten wird, sich darauf zu und davon weg zu bewegen, um einen Schnitt (c) in eine Umfangsrichtung an einem Fleischabschnitt (m) des Stücks von knochenenthaltendem Fleisch (t) in einer Nähe eines gehaltenen Bereichs des Stücks von knochenenthaltendem Fleisch (t) anzufertigen;
mindestens ein Fleischabschnittablöseelement (52), das in den Schnitt (c) in dem Stück von knochenenthaltendem Fleisch (t), das vom Klemmer (30) gehalten wird, einführbar ist und ein Paar Fleischabschnittablöseelemente (54, 56) umfasst, die relativ zueinander hin und voneinander weg bewegbar sind;
ein elastisches Stützteil (68, 88) zum elastischen Stützen des mindestens einen Fleischabschnittablöseelements (52), derart, dass das mindestens eine Fleischabschnittablöseelement (52) eine elastische Kraft auf das Stück von knochenenthaltendem Fleisch (t) aufbringt;
ein Fleischabschnittablöseantriebsteil (38), das in der Lage ist, einen Abstand zwischen dem Klemmer (30) und dem mindestens einen Fleischabschnittablöseelement (52) zu ändern; und
einen zweiten Schneider (78), der sich mit Bezug auf das Stück von knochenenthaltendem Fleisch (t), das vom Klemmer (30) gehalten wird, zum Schneiden des Fleischabschnitts (m), der am zweiten Ende (e2) haftet, einschließlich des Knochenkopfes des Stücks von knochenenthaltendem Fleisch (t), darauf zu und davon weg bewegen kann,
**dadurch gekennzeichnet, dass** sie ferner Folgendes umfasst:
ein Detektionsteil zum Detektieren eines Spalts zwischen dem Paar von Fleischabschnittablöseelementen (54, 56); und eine Steuervorrichtung (23) zum Abschneiden des Fleischabschnitts (m), der am zweiten Ende (e2) haftet, durch Bewegen des zweiten Schneiders (78) zum Stück von knochenenthaltendem Fleisch (t), wenn der Spalt zwischen dem Paar von Fleischabschnittablöseelementen (54, 56) einem Schwellwert oder weniger entspricht.

2. Entbeinungseinrichtung (10A, 10B) für knochenenthaltendes Fleisch nach Anspruch 1,
wobei der Detektionsteil einen Näherungssensor (70) und ein Detektionsobjekt (72) umfasst, wobei eines des Näherungssensors (70) und des Detektionsobjekts (72) an einem feststehenden Bereich der Entbeinungseinrichtung (10A, 10B) für knochenenthaltendes Fleisch angeordnet und das andere des Näherungssensors (70) und des Detektionsobjekts (72) an einem bewegbaren (56) des Paares von Fleischabschnittablöseelementen (54, 56) befestigt ist, und
wobei die Steuervorrichtung (23) dazu ausgelegt ist zu bestimmen, dass der Spalt zwischen dem Paar von Fleischabschnittablöseelementen (54, 56) einem Schwellwert oder weniger entspricht, wenn der Näherungssensor (70) das Detektionsobjekt (72) detektiert oder wenn der Näherungssensor (70) das Detektionsobjekt (72) nicht detektiert.

3. Entbeinungseinrichtung (10A, 10B) für knochenenthaltendes Fleisch nach Anspruch 1 oder 2,
wobei das elastische Stützteil (68, 88) dazu ausgelegt ist, die elastische Kraft, die vom Paar von Fleischabschnittablöseelementen (54, 56) auf das Stück von knochenenthaltendem Fleisch (t) aufzubringen ist, zu ändern, und
wobei die Steuervorrichtung (23) dazu ausgelegt ist, das elastische Stützteil (68, 88) derart zu steuern, dass die elastische Kraft eine erste elastische Kraft (F1) ist, wenn der Spalt zwischen dem Paar von Fleischabschnittablöseelementen (54, 56) dem Schwellwert oder weniger entspricht, und die elastische Kraft eine zweite elastische Kraft (F2) ist, die kleiner ist als die erste elastische Kraft (F1), wenn der Spalt zwischen dem Paar von Fleischabschnittablöseelementen (54, 56) größer ist als der Schwellwert.

4. Entbeinungseinrichtung für knochenenthaltendes Fleisch nach Anspruch 3,
wobei das elastische Stützteil (68, 88) einen Luftzylinder (68) zum elastischen Stützen mindestens eines des Paares von Fleischabschnittablöseelementen (54, 56), einen unter Druck stehenden Luftzufuhrhauptkanal (90), der mit dem Luftzylinder (68) verbunden ist, ein Dreiwegeventil (92), das im unter Druck stehenden Luftzufuhrhauptkanal (90) angeordnet ist, zwei unter Druck stehende Luftzufuhrkanäle (94, 96), die via das Dreiwegeventil (92) mit dem unter Druck stehenden Luftzufuhrhauptkanal (90) verbunden sind, um schaltbar zu sein, und zwei Druckeinstellventile (98, 100), die an den zwei jeweiligen unter Druck stehenden Luftzufuhrkanälen (94, 96) angeordnet sind, beinhaltet, und
wobei die Steuervorrichtung (23) dazu ausgelegt ist, das Dreiwegeventil (92) derart zu steuern, dass die elastische Kraft eine erste elastische Kraft (F1) ist, wenn der Spalt zwischen dem Paar von Fleischabschnittablöseelementen (54, 56) dem Schwellwert oder weniger entspricht, und die elastische Kraft die zweite elastische Kraft (F2) ist, wenn der Spalt zwischen dem Paar von Fleischabschnittablöseelementen (54, 56) größer ist als der Schwellwert.

5. Entbeinungseinrichtung für knochenenthaltendes Fleisch nach einem der Ansprüche 1 bis 4, die ferner Folgendes umfasst
ein Drehantriebsteil (32) zum Drehen des Klemmers (30) um eine Drehachse (24),
wobei ein Schnittanfertigungsteil (2st), das den ersten Schneider (50) beinhaltet, ein Fleischabschnittablöseteil (I), das das mindestens eine Fleischabschnittablöseelement (52) beinhaltet, und ein Knochen-Fleisch-Trennteil (5st), das den zweiten Schneider (78) beinhaltet, entlang einer Kreisbahn des Klemmers (30) angeordnet sind.

6. Entbeinungseinrichtung (10A, 10B) für knochenenthaltendes Fleisch nach Anspruch 5,
wobei das Fleischabschnittablöseteil (I) ein erstes Fleischabschnittablöseteil (3st), das dazu ausgelegt ist, den Fleischabschnitt (m) bis zu einer Zwischenposition in eine Axialrichtung des Knochenabschnitts (b) des Stücks von knochenenthaltendem Fleisch (t) abzulösen, und ein zweites Fleischabschnittablöseteil (4st), das dazu ausgelegt ist, den Fleischabschnitt (m) von der Zwischenposition in die Axialrichtung des Knochenabschnitts (b) des Stücks von knochenenthaltendem Fleisch (t) des zweiten Endes (e2) abzulösen, beinhaltet.

7. Entbeinungseinrichtung (10A, 10B) für knochenenthaltendes Fleisch nach Anspruch 6,
wobei die Steuervorrichtung (23) derart ausgelegt ist, dass der Spalt zwischen dem Paar von Fleischabschnittablöseelementen (54, 56) am ersten Fleischabschnittablöseteil (3st) nicht detektiert wird und auf einen festen Wert eingestellt ist, und
wobei das zweite Fleischabschnittablöseteil (4st) im Knochen-Fleisch-Trennteil (5st) angeordnet ist.

8. Entbeinungseinrichtung (10A, 10B) für knochenenthaltendes Fleisch nach Anspruch 7,
wobei die Steuervorrichtung (23) derart ausgelegt ist, dass der Spalt zwischen dem Paar von Fleischabschnittablöseelementen (54, 56) vom Detektionsteil am zweiten Fleischabschnittablöseteil (4st) detektiert wird.

9. Verfahren zum Entbeinen von knochenenthaltendem Fleisch, das Folgendes umfasst:
einen Klemmschritt zum Halten eines Stücks von knochenenthaltendem Fleisch (t) mit einem Klemmer (30), wobei das Stück von knochenenthaltendem Fleisch (t) ein erstes Ende (e1) und ein zweites Ende (e2) aufweist und mindestens im zweiten Ende (e2) einen Knochenkopf beinhaltet;
einen Schnittanfertigungsschritt zum Anfertigen eines Schnitts (c) in eine Umfangsrichtung an einem Fleischabschnitt (m) des Stücks von knochenenthaltendem Fleisch (t) in einer Nähe eines gehaltenen Bereichs des Stücks von knochenenthaltendem Fleisch (t), das vom Klemmer (30) am ersten Ende (e1) gehalten wird;
einen Fleischabschnittablöseschritt zum Ablösen des Fleischabschnitts (m) des Stücks von knochenenthaltendem Fleisch (t) durch Erhöhen eines Abstands zwischen dem Klemmer (30) und mindestens einem Fleischabschnittablöseelement (52), das ein Paar von Fleischabschnittablöseelementen (54, 56) umfasst, die zueinander hin und voneinander weg bewegbar sind, unter Verwendung des Fleischabschnittablöseelements (52), das in den Schnitt (c) eingeführt ist; und
einen Knochen-Fleisch-Trennschritt zum Abschneiden des Fleischabschnitts (m), das am zweiten Ende (e2) haftet, vom zweiten Ende (e2), wenn das zweite Ende (e2), das den Knochenkopf des Stücks von knochenenthaltendem Fleisch (t) beinhaltet, im Fleischabschnittablöseschritt das mindestens eine Fleischabschnittablöseelement (52) erreicht,
wobei im Fleischabschnittablöseschritt das mindestens eine Fleischabschnittablöseelement (52) derart elastisch gestützt wird, dass das mindestens eine Fleischabschnittablöseelement (52) das Stück von knochenenthaltendem Fleisch (t) berührt, während eine elastische Kraft auf das Stück von knochenenthaltendem Fleisch (t) aufgebracht wird,
wobei das Verfahren **dadurch gekennzeichnet ist, dass** der Knochen-Fleisch-Trennschritt Folgendes beinhaltet:
einen Detektionsschritt zum Detektieren eines Spalts zwischen dem Paar von Fleischabschnittablöseelementen (54, 56); und
einen Knochen-Fleisch-Trennschritt zum Abschneiden des Fleischabschnitts (m), der am zweiten Ende (e2) haftet, wenn der Spalt zwischen dem Paar von Fleischabschnittablöseelementen (54, 56) einem Schwellwert oder weniger entspricht.

10. Verfahren zum Entbeinen von knochenenthaltendem Fleisch nach Anspruch 9,
wobei im Fleischabschnittablöseschritt die elastische Kraft auf eine erste elastische Kraft (F1) eingestellt ist, wenn der Spalt zwischen dem Paar von Fleischabschnittablöseelementen (54, 56) dem Schwellwert oder weniger entspricht, und die elastische Kraft auf eine zweite elastische Kraft (F2) eingestellt ist, die kleiner ist als die erste elastische Kraft (F1), wenn der Spalt zwischen dem Paar von Fleischabschnittablöseelementen (54, 56) größer ist als der Schwellwert.

11. Verfahren zum Entbeinen von knochenenthaltendem Fleisch nach einem der Ansprüche 9 oder 10,
wobei das Stück von knochenenthaltendem Fleisch (t) ein oberes Segment eines Hühnerflügels eines Hühnerschlachtkörpers beinhaltet, das einem Körper näher ist und von dem ein Spitzensegment des Hühnerflügels getrennt wird, wobei das Segment von einer Brust an einer Schulter des Hühnerschlachtkörpers getrennt wird.

## Revendications

1. Appareil de désossage de viande à os (10A, 10B) comprenant :
une pince (30) pour maintenir une pièce de viande à os (t) ayant une première extrémité (e1) et une seconde extrémité (e2) et comprenant une tête d'os au moins dans la seconde extrémité (e2) ;
un premier dispositif de coupe (50) pouvant se rapprocher et s'éloigner de la pièce de viande à os (t) qui est maintenue par la pince (30) au niveau de la première extrémité (e1), pour réaliser une découpe (c) dans une direction circonférentielle sur une partie de viande (m) de la pièce de viande à os (t) à proximité d'une section maintenue de la pièce de viande à os (t) ;
au moins un élément de détachement de partie de viande (52) qui peut être inséré dans la découpe (c) sur la pièce de viande à os (t) qui est maintenue par la pince (30) et comprend une paire d'éléments de détachement de partie de viande (54, 56) qui sont mobiles vers et à distance l'un de l'autre ;
une partie de support élastique (68, 88) pour supporter élastiquement le au moins un élément de détachement de partie de viande (52) de sorte qu'au moins un élément de détachement de partie de viande (52) applique une force élastique sur la pièce de viande à os (t) ;
une partie d'entraînement de détachement de partie de viande (38) pouvant modifier une distance entre la pince (30) et le au moins un élément de détachement de partie de viande (52) ; et
un second dispositif de coupe (78) pouvant se rapprocher et s'éloigner de la pièce de viande à os (t) qui est maintenue par la pince (30), pour découper la partie de viande (m) adhérant à la seconde extrémité (e2) comprenant la tête d'os de la pièce de viande à os (t),
**caractérisé en ce qu'**il comprend en outre :
une partie de détection pour détecter un espace entre la paire d'éléments de détachement de partie de viande (54, 56) ; et
un dispositif de commande (23) pour découper la partie de viande (m) adhérant à la seconde extrémité (e2) en déplaçant le second dispositif de coupe (78) vers la pièce de viande à os (t) lorsque l'espace entre la paire d'éléments de détachement de partie de viande (54, 56) est à une valeur de seuil ou inférieur.

2. Appareil de désossage de viande à os (10A, 10B) selon la revendication 1,
dans lequel la partie de détection comprend un capteur de proximité (70) et un objet de détection (72), l'un parmi le capteur de proximité (70) et l'objet de détection (72) étant disposé sur une section fixe dans l'appareil de désossage de viande à os (10A, 10B) et l'autre parmi le capteur de proximité (70) et l'objet de détection (72) étant fixé sur un élément mobile (56) de la paire d'éléments de détachement de partie de viande (54, 56), et
dans lequel le dispositif de commande (23) est configuré pour déterminer que l'espace entre la paire d'éléments de détachement de partie de viande (54, 56) est à la valeur de seuil ou inférieur lorsque le capteur de proximité (70) détecte l'objet de détection (72) ou lorsque le capteur de proximité (70) ne détecte pas l'objet de détection (72).

3. Appareil de désossage de viande à os (10A, 10B) selon la revendication 1 ou 2,
dans lequel la partie de support élastique (68, 88) est configurée pour modifier la force élastique à appliquer sur la pièce de viande à os (t) par la paire d'éléments de détachement de partie de viande (54, 56), et
dans lequel le dispositif de commande (23) est configuré pour commander la partie de support élastique (68, 88) de sorte que la force élastique est une première force élastique (F1) lorsque l'espace entre la paire d'éléments de détachement de partie de viande (54, 56) est à la valeur de seuil ou inférieur, et la force élastique est une seconde force élastique (F2) qui est inférieure à la première force élastique (F1) lorsque l'espace entre les éléments de détachement de partie de viande (54, 56) est supérieur à la valeur de seuil.

4. Appareil de désossage de viande à os selon la revendication 3,
dans lequel la partie de support élastique (68, 88) comprend un vérin pneumatique (68) pour supporter élastiquement au moins l'un de la paire d'éléments de détachement de partie de viande (54, 56), un canal d'alimentation en air sous pression principal (90) raccordé au vérin pneumatique (68), une valve à trois voies (92) disposée dans le canal d'alimentation en air sous pression principal (90), deux canaux d'alimentation en air sous pression (94, 96) raccordés au canal d'alimentation en air sous pression principal (90) via la valve à trois voies (92) afin d'être commutés, et deux valves d'ajustement de pression (98, 100) disposées sur les deux canaux d'alimentation en air sous pression (94, 96) respectifs, et
dans lequel le dispositif de commande (23) est configuré pour commander la valve à trois voies (92) de sorte que la force élastique est la première force élastique (F1) lorsque l'espace entre la paire d'éléments de détachement de partie de viande (54, 56) est à la valeur de seuil ou inférieur, et la force élastique est la seconde force élastique (F2) lorsque l'espace entre la paire d'éléments de détachement de partie de viande (54, 56) est supérieur à la valeur de seuil.

5. Appareil de désossage de viande à os selon l'une quelconque des revendications 1 à 4, comprenant en outre :
une partie d'entraînement rotative (32) pour faire tourner la pince (30) autour d'un axe de rotation (24),
dans lequel une partie de réalisation de découpe (2st) comprenant le premier dispositif de coupe (50), une partie de détachement de partie de viande (I) comprenant le au moins un élément de détachement de partie de viande (52), et une partie de séparation d'os - viande (5st) comprenant le second dispositif de coupe (78) sont agencés le long d'un rail circulaire de la pince (30).

6. Appareil de désossage de viande à os (10A, 10B) selon la revendication 5,
dans lequel la partie de détachement de partie de viande (I) comprend une première partie de détachement de partie de viande (3st) configurée pour détacher la partie de viande (m) dans une position intermédiaire dans une direction axiale d'une partie d'os (b) de la pièce de viande à os (t) et une seconde partie de détachement de partie de viande (4st) configurée pour détacher la partie de viande (m) de la position intermédiaire dans la direction axiale de la partie d'os (b) de la pièce de viande à os (t) à la seconde extrémité (e2).

7. Appareil de désossage de viande à os (10A, 10B) selon la revendication 6,
dans lequel le dispositif de commande (23) est configuré de sorte que l'espace entre la paire d'éléments de détachement de partie de viande (54, 56) n'est pas détecté et déterminé à une valeur fixe au niveau de la première partie de détachement de partie de viande (3st), et
dans lequel la seconde partie de détachement de partie de viande (4st) est disposée dans la partie de séparation d'os - viande (5st).

8. Appareil de désossage de viande à os (10A, 10B) selon la revendication 7,
dans lequel le dispositif de commande (23) est configuré de sorte que l'espace entre la paire d'éléments de détachement de partie de viande (54, 56) est détecté par la partie de détection au niveau de la seconde partie de détachement de partie de viande (4st) .

9. Procédé de désossage de viande à os, comprenant :
une étape de serrage pour maintenir une pièce de viande à os (t) avec une pince (30), la pièce de viande à os (t) ayant une première extrémité (e1) et une seconde extrémité (e2) et comprenant une tête d'os au moins dans la seconde extrémité (e2) ;
une étape de réalisation de découpe pour réaliser une découpe (c) dans une direction circonférentielle sur une partie de viande (m) de la pièce de viande à os (t) à proximité d'une section maintenue de la pièce de viande à os (t) maintenue par la pince (30) au niveau de la première extrémité (e1) ;
une étape de détachement de partie de viande pour détacher la partie de viande (m) de la pièce de viande à os (t) en augmentant une distance entre la pince (30) et au moins un élément de détachement de partie de viande (52) qui comprend une paire d'éléments de détachement de partie de viande (54, 56) qui sont mobiles vers et à distance l'un de l'autre, à l'aide de l'élément de détachement de partie de viande (52) inséré dans la découpe (c) ; et
une étape de séparation d'os - viande pour couper la partie de viande (m) adhérant à la seconde extrémité (e2) de la seconde extrémité (e2) lorsque la seconde extrémité (e2) comprenant la tête d'os de la pièce de viande à os (t) atteint le au moins un élément de détachement de partie de viande (52) à l'étape de détachement de partie de viande,
dans lequel, à l'étape de détachement de partie de viande, le au moins un élément de détachement de partie de viande (52) est supporté élastiquement de sorte que le au moins un élément de détachement de partie de viande (52) est en contact avec la pièce de viande à os (t) tout en appliquant une force élastique sur la pièce de viande à os (t),
le procédé étant **caractérisé en ce que** l'étape de séparation d'os - viande comprend :
une étape de détection pour détecter un espace entre la paire d'éléments de détachement de partie de viande (54, 56) ; et
une étape de séparation d'os - viande pour couper la partie de viande (m) adhérant à la seconde extrémité (e2) lorsque l'espace entre la paire d'éléments de détachement de partie de viande (54, 56) est à une valeur de seuil ou inférieur.

10. Procédé de désossage de viande à os selon la revendication 9,
dans lequel, à l'étape de détachement de partie de viande, la force élastique est réglée sur une première force élastique (F1) lorsque l'espace entre la paire d'éléments de détachement de partie de viande (54, 56) est à la valeur de seuil ou inférieur, et la force élastique est réglée sur une seconde force élastique (F2) qui est inférieure à la première force élastique (F1) lorsque l'espace entre la paire d'éléments de détachement de partie de viande (54, 56) est supérieur à la valeur de seuil.

11. Procédé de désossage de viande à os selon l'une quelconque des revendications 9 ou 10,
dans lequel la pièce de viande à os (t) comprend un segment supérieur d'une aile de poulet d'une carcasse de poulet qui est plus proche d'un corps et duquel un segment de pointe de l'aile de poulet est séparé, le segment étant séparé d'une poitrine au niveau d'une épaule de la carcasse de poulet.
